# FASCICULE DE BREVET EUROPEEN

(11) **EP 1 846 727 B1**
(45) Date de publication et mention de la délivrance du brevet: **02.07.2008**
(21) Numéro de dépôt: 06709067.0
(22) Date de dépôt: 11.01.2006
(51) Int. Cl.: G01B 11/06, G02B 21/00, G01B 11/00

(54) **PALPEUR OPTIQUE AINSI QUE DISPOSITIF ET PROCÉDÉ LE METTANT EN OEUVRE**
OPTISCHE SONDE UND DIESE VERWENDENDE EINRICHTUNG UND METHODE
OPTICAL PROBE AND DEVICE AND METHOD MAKING USE THEREOF

(30) Priorité: 14.01.2005 FR 0500405
(43) Date de publication de la demande: 24.10.2007
(73) Titulaire: ESSILOR INTERNATIONAL (COMPAGNIE GENERALE D'OPTIQUE), 94220 Charenton le Pont (FR); MB OPTIQUE, 75016 Paris (FR)
(72) Inventeur: DUBOIS, Frédéric, F-92160 Anthony (FR); BRAY, Michel, F-75012 Paris (FR)
(74) Mandataire: Lepelletier-Beaufond, François
(86) Numéro de dépôt international: PCT/FR2006/000059
(87) Numéro de publication internationale: WO 2006/075090

(56) Documents cités:
- EP-A- 0 939 294
- EP-A- 1 371 939
- US-A- 4 464 050
- US-A- 4 767 211
- BUTLER D J ET AL: "CONFOCAL PROFILOMETER WITH NANOMETRIC VERTICAL RESOLUTION" OPTICS COMMUNICATIONS, NORTH-HOLLAND PUBLISHING CO. AMSTERDAM, NL, vol. 100, no. 1 / 4, 1 juillet 1993 (1993-07-01), pages 87-92, XP000380427 ISSN: 0030-4018

## Description

L'invention a trait aux palpeurs de surface.

On connaît déjà des palpeurs mécaniques dont l'extrémité vient en contact avec la surface dont on souhaite connaître la position. Lorsque l'extrémité distale du palpeur rentre en contact avec la surface en regard de laquelle il est disposé, celui-ci transmet via un capteur de contraintes mécaniques un signal indiquant la mise en butée du palpeur contre cette surface. La lecture de la position du palpeur sur une règle de repérage permet de connaître sa position et d'en déduire celle de la surface.

On connaît également, notamment par les brevets américains 6 713 718 et 4767211 et le brevet britannique 2 337 815, des palpeurs optiques sans contact qui émettent un faisceau lumineux et détectent, à partir du faisceau réfléchi par la surface, s'ils sont situés ou non à une distance prédéterminée de celle-ci.

L'invention vise à fournir un palpeur optique du même genre qui soit simple, commode et performant.

Elle propose à cet effet un palpeur optique comportant des moyens opto-électriques adaptés à prendre un état électrique prédéterminé si et seulement si ledit palpeur est situé à une distance cible préfixée par rapport à une surface au moins partiellement réfléchissante, ledit palpeur comportant :
- une source lumineuse ;
- des moyens de conformation pour conformer le faisceau émis par ladite source lumineuse en un faisceau incident convergeant vers un foyer situé à ladite distance cible et pour conformer le faisceau provenant de ladite surface par réflexion dudit faisceau incident lorsque ladite surface est au voisinage de ladite distance cible en un faisceau à détecter convergeant vers un foyer, distinct de ladite source lumineuse, occupant un emplacement prédéterminé lorsque ladite surface est à ladite distance cible ; et
- un ensemble de détection optique comportant un diaphragme à trou d'épingle (en anglais : pinhole), disposé audit emplacement prédéterminé, et un capteur photoélectrique produisant un pic de tension lorsque ladite surface est à ladite distance cible ;
caractérisé en ce que :
- lesdits moyens de conformation sont adaptés à conformer également ledit faisceau provenant de ladite surface en un faisceau de discrimination convergeant vers un foyer distinct de ladite source lumineuse et dudit foyer du faisceau à détecter, occupant un autre emplacement prédéterminé lorsque ladite surface est à ladite distance cible; et
- ledit palpeur comporte en outre un ensemble de discrimination optique comportant un diaphragme à trou plus grand que ledit trou d'épingle, disposé au moins à proximité dudit autre emplacement prédéterminé, et un capteur photoélectrique produisant une tension supérieure à ladite tension produite par ledit capteur de détection sauf lorsque ladite surface est à la distance cible, grâce à quoi ledit état électrique prédéterminé est celui où la tension produite par le capteur de détection est supérieure à la tension produite par le capteur de discrimination.

Un palpeur optique de ce type, qui ne rentre pas en contact avec la surface dont on souhaite connaître la position, de sorte qu'il ne risque pas de porter atteinte à cette surface, offre l'avantage de pouvoir être réalisé avec des composants optiques simples et à coût réduit.

Il est en outre possible, par exemple en mettant en oeuvre les caractéristiques exposées ci-après, de réaliser un palpeur optique particulièrement compact, au point qu'il puisse venir en remplacement d'un palpeur mécanique.

Selon des caractéristiques préférées, pour des raisons de simplicité et de commodité tant à la fabrication qu'à l'utilisation :
- lesdits moyens de conformation comportent : un bloc séparateur semi-réfléchissant de détection apte à orienter ledit faisceau à détecter vers ledit ensemble de détection ; un bloc séparateur semi-réfléchissant de discrimination apte à orienter ledit faisceau de discrimination vers ledit ensemble de discrimination ; et un objectif ;
- ledit bloc séparateur de détection est disposé entre ladite source lumineuse et ledit bloc séparateur de discrimination, tandis que ledit bloc séparateur de discrimination est disposé entre ledit bloc séparateur de détection et ledit objectif ;
- ledit bloc séparateur de détection et ledit bloc séparateur de discrimination sont accolés l'un à l'autre ;
- ledit ensemble de détection est disposé en regard dudit bloc séparateur de détection transversalement à l'axe optique du palpeur et ledit ensemble de discrimination est disposé en regard dudit bloc séparateur de discrimination transversalement à l'axe optique du palpeur ;
- ledit bloc séparateur de détection et ledit bloc séparateur de discrimination comportent chacun un miroir semi-réfléchissant incliné à 45° par rapport à l'axe optique du palpeur ; et/ou
- lesdits miroirs ont un taux de réflexion/transmission 50/50 ; ou
- ledit miroir du bloc séparateur de détection a un taux de réflexion/transmission 50/50 et ledit miroir du bloc séparateur de discrimination a un taux de réflexion/transmission 10/90 ;
- ledit trou d'épingle a un diamètre compris entre 10 et 30 micromètres ; et/ou
- ledit objectif est formé par l'association d'une lentille plan-convexe et d'une lentille asphérique.

Selon d'autres caractéristiques préférées, pour les mêmes raisons que celle indiquées ci-dessus :
- ladite source lumineuse est une diode laser à amplificateur intégré ;
- la longueur d'onde d'émission de ladite diode laser est comprise entre 635 et 1600 nanomètres ; et/ou
- la lumière est émise directement de ladite diode laser jusqu'au bloc séparateur de détection.

Cette solution permet de contribuer à rendre le palpeur plus compact et peut être mise en oeuvre indépendamment des caractéristiques exposées auparavant.

Selon d'autres caractéristiques préférées, pour les mêmes raisons que celles indiquées ci-dessus, ladite source lumineuse, lesdits moyens de conformation, ledit ensemble de détection et ledit ensemble de discrimination sont noyés solidairement par coulage d'une résine qui les maintient en position les uns par rapport aux autres.

Cette solution permet de s'assurer d'un maintien en position, stable dans le temps, des différents composants optiques les uns par rapport aux autres, ce qui permet au palpeur de conserver toutes ses caractéristiques optiques. Cette solution peut être mise en oeuvre indépendamment des caractéristiques exposées auparavant.

L'invention vise également, sous un deuxième aspect, un dispositif de mesure d'épaisseur d'un objet dont les surfaces entre lesquelles on souhaite mesurer l'épaisseur sont au moins partiellement réfléchissantes, caractérisé en ce que ledit dispositif comporte :
- deux bras de palpage de part et d'autre dudit objet comportant chacun un palpeur tel qu'exposé ci-dessus et des moyens de déplacement desdits palpeurs ;
- pour chaque bras de palpage, une tête de lecture pour repérer la position de ce bras sur une règle de repérage ; et
- des unités électroniques pour commander lesdits moyens de déplacement, pour lire la position desdits palpeurs et pour calculer ladite épaisseur dudit objet lorsque lesdits palpeurs sont situés auxdites distances cibles préfixées.

L'invention vise également, sous un troisième aspect, un procédé de mesure de l'épaisseur d'une lentille optique, caractérisé en ce qu'il comporte l'étape de positionner le palpeur de chaque bras de palpage du dispositif de mesure d'épaisseur tel qu'exposé ci-dessus à ladite distance cible par rapport à ladite surface en regard de laquelle il est disposé et l'étape de déterminer ladite épaisseur par comparaison desdites positions desdits palpeurs.

Les caractéristiques et avantages de l'invention ressortiront de la description qui suit, donnée à titre d'exemple préféré, mais non limitatif, en référence aux dessins annexés, sur lesquels :
- la figure 1 est une vue schématique d'un dispositif de mesure d'épaisseur conforme à l'invention ;
- la figure 2 est une vue agrandie plus détaillée des extrémités distales des palpeurs de ce dispositif, montrant également une lentille ophtalmique en cours de mesure et le support de lentille que comporte ce dispositif ;
- la figure 3 est une vue similaire à la figure 1 mais illustrant isolément de façon détaillée un des deux palpeurs optiques conformes à l'invention ainsi que les moyens de traitement, de commande et de déplacement qui lui sont associés ;
- la figure 4 est une vue schématique de la partie optique et opto-électrique de chaque palpeur ;
- la figure 5 est un graphique illustrant la forme théorique des signaux électriques émis par les détecteurs du palpeur optique en fonction de la distance relative séparant le foyer du palpeur optique de la surface à repérer ;
- la figure 6 illustre sur un même graphique le signal de discrimination théorique ainsi que le signal de détection et le signal de discrimination obtenus en pratique ; et
- la figure 7 est un graphique représentant le signal logique obtenu après comparaison des signaux de détection et de discrimination transmis par les détecteurs du palpeur optique en fonction de la distance relative séparant le foyer du palpeur optique de la surface à repérer.

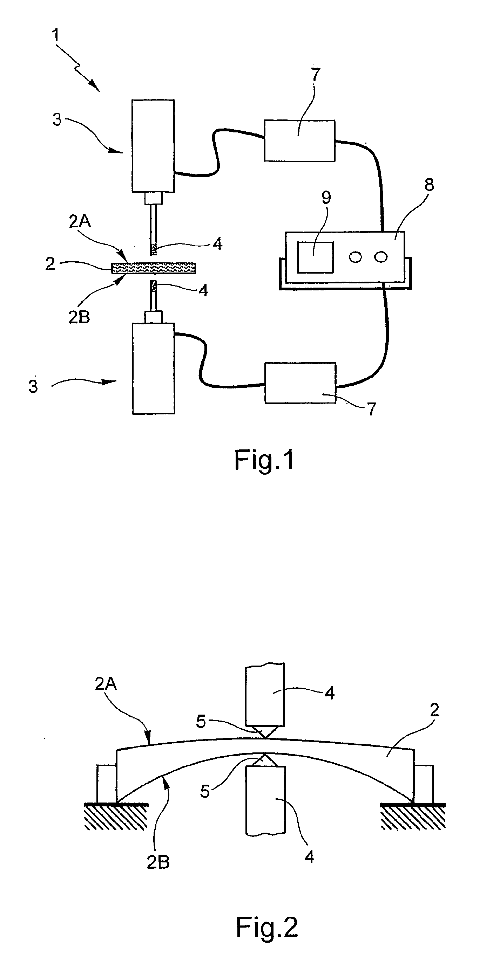

La figure 1 est une représentation schématique d'un dispositif de mesure 1 conforme à l'invention appliqué à la mesure de l'épaisseur de lentilles ophtalmologiques 2 telles que des verres de lunettes. La position de chaque face principale 2A, 2B du verre 2 est repérée par des palpeurs optiques 3 dont les extrémités distales 4 sont respectivement placées en regard de chacune des surfaces 2A, 2B à repérer. Les palpeurs optiques 3 sont identiques ainsi que les unités électroniques 7. Ils permettent chacun de repérer une respective des surfaces 2A et 2B.

Chaque palpeur 3 émet un faisceau lumineux incident 5 (figure 2). L'analyse par le palpeur 3 de la lumière réfléchie par la surface 2A ou 2B en regard de laquelle il est disposé permet de détecter, comme on le verra ci-après, si l'extrémité distale du capteur se situe ou non à une distance cible prédéterminée par rapport à cette surface.

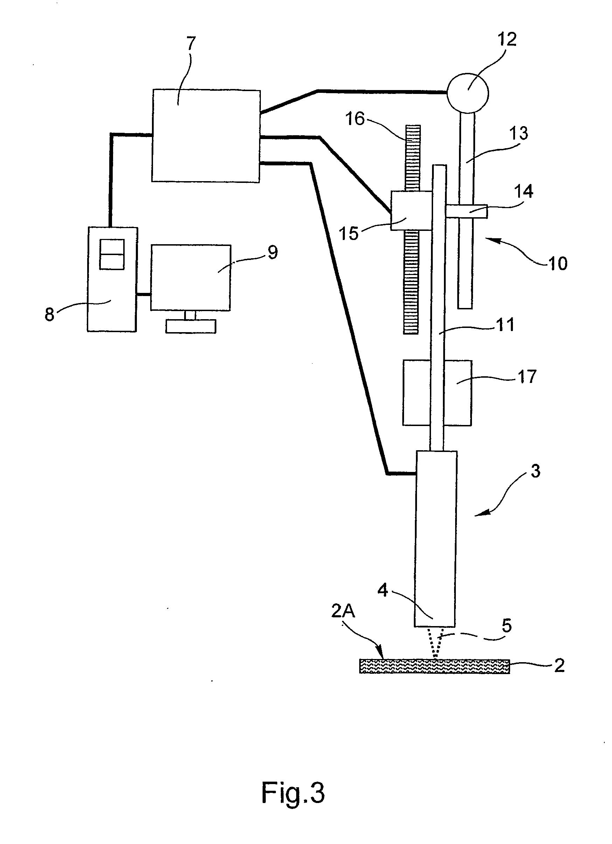

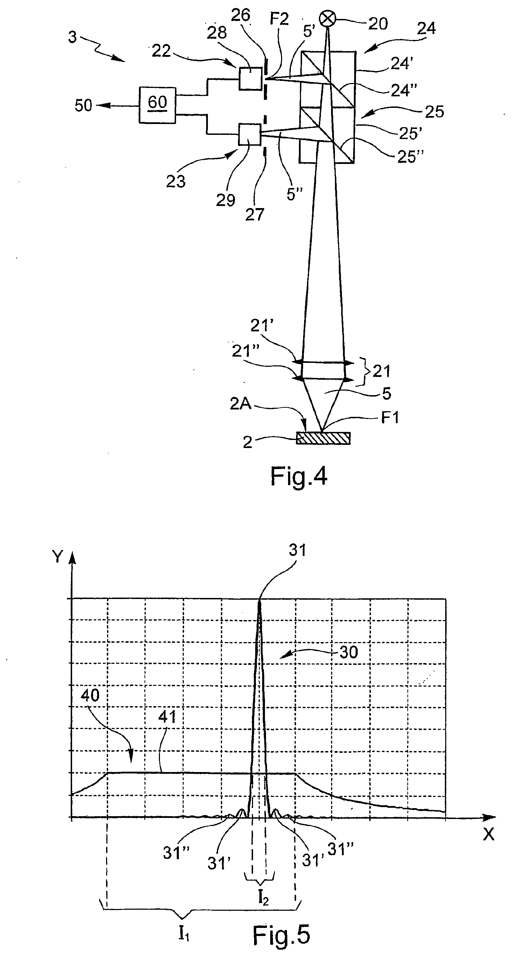

Sur les figures 3 et 4, on a représenté le palpeur 3 en regard de la surface 2A, mais la description qui suit vaut également pour l'autre capteur 3.

Chaque palpeur 3 est relié par l'intermédiaire d'une unité électronique 7 à une unité centrale de traitement et de commande 8 disposant éventuellement de moyens d'affichage 9.

Le palpeur 3 est associé à des moyens de déplacement 10 par rapport à la surface à repérer afin de former un bras de palpage.

Ces moyens de déplacement comprennent une tige de liaison 11 reliée au palpeur 3, un moteur d'entraînement 12, une tige d'entraînement 13 et une patte d'attache 14.

Les tiges 11 et 13 sont reliées par la patte d'attache 14.

La tige 11 est reliée à une tête de lecture 15 mobile sur une règle de repérage 16.

Les moyens de déplacement 10 sont complétés par des moyens de guidage 17 entourant la tige de liaison 11.

Le moteur 12, la tête de lecture mobile 15 et le palpeur 3 sont connectés à une unité électronique 7 réalisant l'interface avec une unité centrale 8 commune aux deux palpeurs (figure 1).

Conformément à l'invention, le palpeur optique 3 comporte, ainsi qu'illustré sur la figure 4, une source lumineuse 20, un ensemble de détection 22, un ensemble de discrimination 23 et des moyens de conformation.

Ces moyens de conformation sont disposés entre la source lumineuse 20 et la surface 2A (respectivement 2B) à repérer et comportent un bloc séparateur de détection 24, un bloc séparateur de discrimination 25 et un objectif 21.

Le bloc de détection 24 est disposé entre la source lumineuse 20 et le bloc de discrimination 25 tandis qu'il est en regard de l'ensemble de détection 22 selon un axe transversal à l'axe optique du palpeur.

Le bloc de discrimination 25 est disposé entre le bloc de détection 24 et l'objectif 21 tandis qu'il est en regard de l'ensemble de discrimination 23 selon un axe transversal à l'axe optique du palpeur.

Dans l'exemple illustré, en vue d'optimiser la compacité du palpeur, les deux blocs 24 et 25 sont accolés.

Les blocs séparateurs 24 et 25 contiennent chacun un miroir dichroïque semi-réfléchissant 24" ou 25" dans un entourage de forme cubique 24' ou 25'. Les miroirs semi-réfléchissants 24" et 25" sont orientés selon le plan diagonal du cube s'étendant de l'arête du cube située la plus proche de la source de lumière 20 et de l'ensemble 22 ou 23 correspondant jusqu'à l'arête diagonalement opposée, formant un angle de 45° avec l'axe optique du palpeur.

Les miroirs semi-réfléchissants ont un taux de réflexion/transmission 50/50.

L'objectif 21 est dans l'exemple illustré composé d'un système de lentilles 21' et 21" accolées : par exemple une lentille plan-convexe 21' en association avec une lentille asphérique moulée 21".

L'ensemble de détection 22 est formé d'un diaphragme 26 à trou d'épingle, placé contre un capteur photoélectrique 28 de type photodiode à préamplificateur intégré par exemple.

Le trou du diaphragme 26 a un diamètre de l'ordre de 10 à 30 micromètres.

L'ensemble de discrimination 23 est formé également d'un diaphragme 27 placé contre un capteur photoélectrique 29 de type photodiode à préamplificateur intégré par exemple, mais le diaphragme 27 de l'ensemble de discrimination 23 a un trou de diamètre supérieur au trou d'épingle du diaphragme 26 de façon à avoir une sensibilité spatiale plus large.

Dans l'exemple illustré on utilise une diode laser comme source lumineuse 20. La zone émissive d'une diode laser est suffisamment ponctuelle et suffisamment faiblement divergente pour qu'il ne soit pas nécessaire d'ajouter ni diaphragme d'entrée ni lentille après cette diode laser. Le trajet de la lumière est donc direct entre la source lumineuse 20 et le bloc de détection 24, ce qui contribue à rendre le palpeur plus compact.

Une longueur d'onde d'émission comprise entre 635 et 1600 nanomètres convient pour la diode 20.

On va maintenant décrire le trajet optique du faisceau lumineux émis par la diode laser 20 jusqu'à l'ensemble de détection 22 et l'ensemble de discrimination 23.

Une partie du flux lumineux émis par la source 20 traverse sans être déviée les deux miroirs semi-réfléchissants 24" et 25". Ce faisceau transmis est conformé après avoir traversé l'objectif 21 en un faisceau incident 5 convergeant vers le foyer F1 du montage situé à une distance cible préfixée.

Le faisceau provenant de la réflexion du faisceau incident par la surface à repérer lorsqu'elle est au voisinage de cette distance cible, traverse de nouveau l'objectif 21 puis une partie du flux lumineux est dirigée par réflexion sur le miroir semi-réfléchissant 24" vers l'ensemble de détection 22, selon un axe transversal à l'axe optique du montage afin de former un faisceau à détecter 5' convergeant vers un foyer F2 distinct de la source lumineuse et occupant le centre du diaphragme 26 lorsque la surface 2A (respectivement 2B) se situe à la distance cible.

Le capteur photoélectrique 28 placé derrière le diaphragme 26 à trou d'épingle permet de détecter en fonction de la lumière reçue, la présence de cette surface lorsqu'elle est située à cette distance cible préfixée car lorsque cette surface est au niveau du foyer F1, le faisceau à détecter 5' converge vers le foyer F2 qui occupe alors le centre du diaphragme. Le diaphragme à trou d'épingle 26 laisse donc passer un maximum de lumière. A l'inverse lorsque il existe un écart entre le foyer F1 et la surface à repérer, le faisceau réfléchi ne converge plus vers le centre du diaphragme mais vers un point décalé axialement selon l'axe optique du montage : la lumière réfléchie est alors quasiment totalement bloquée par le matériau opaque entourant le trou d'épingle du diaphragme.

La lumière réfléchie émise par les plans défocalisés est donc limitée grâce au diaphragme 26 de l'ensemble de détection 22 : seule la lumière réfléchie au niveau du foyer F1 est en mesure de traverser ce diaphragme pour venir exciter la zone sensible à la lumière du capteur de détection 28.

Une autre partie du flux est dirigée par réflexion sur le miroir semi-réfléchissant 25" selon l'axe transversal à l'axe optique du montage vers l'ensemble de discrimination 23 afin de former un faisceau de discrimination 5" convergeant vers un autre foyer, distinct de la source lumineuse 20 et du foyer F2 du faisceau à détecter 5', et à proximité duquel se situe l'ensemble de discrimination 23 lorsque la surface 2A (respectivement 2B) est située à la distance cible.

Chacun des capteurs 28 et 29 produit une tension électrique proportionnelle à l'intensité lumineuse reçue.

On va maintenant décrire le fonctionnement du palpeur optique à l'aide de la figure 5.

Sur ce graphique sont représentées (en ordonnée Y) les valeurs de tension transmises par les capteurs de détection 28 et de discrimination 29 en fonction de la distance relative (en abscisse X) de la surface à repérer par rapport au foyer F1.

Afin de déterminer la position de la surface de l'objet à repérer, l'unité 8 va commander les moyens de déplacement 10 jusqu'à ce que le palpeur atteigne une distance le séparant de la surface comprise dans un intervalle de détection I₂ autour de la distance cible et dont on verra ci-après comment il est obtenu.

Au cours du déplacement du palpeur par rapport à la surface à repérer, les intensités lumineuses reçues par les ensembles de détection 22 et de discrimination 23 varient : le capteur de détection 28 fournit un signal de détection illustré par la courbe 30 tandis que le capteur de discrimination 29 fournit un signal de discrimination illustré par la courbe 40.

Lorsque la surface 2A (respectivement 2B) de l'objet à repérer est confondue avec le foyer F1 du palpeur, la lumière du faisceau 5' traverse le diaphragme 26 et éclaire le capteur 28 de l'ensemble de détection 22. A l'inverse, lorsque le foyer F1 du palpeur s'éloigne de la surface 2A (respectivement 2B) ou lorsque la surface 2A (respectivement 2B) s'éloigne du foyer F1, une partie très importante de la lumière réfléchie ne traverse plus le diaphragme 26 et l'intensité lumineuse reçue par le capteur 28 diminue significativement.

La dimension très réduite du diaphragme 26 entraîne une grande sélectivité spatiale, ce qui se traduit par un pic de tension 31 très étroit.

Cette taille réduite entraîne des phénomènes de diffraction qui sont à l'origine d'une forme générale pour la courbe 30 de type sinus cardinal au carré, ce qui explique la présence de pics secondaires 31', 31 ", etc.

Ces pics secondaires ne facilitent pas la détection du pic 31. En particulier, la recherche de l'annulation de la dérivée du signal de tension produit par le capteur 28 ne ferait pas la différence entre les différents pics. Une détection de seuil est possible mais la valeur du seuil serait dépendante du taux de réflexion soit, dans le cas d'un verre de lunettes, de l'indice du verre ou de la nature des traitements de surface. Le seuil serait donc à ajuster pour chaque type de surface et de matériau.

L'ensemble de discrimination 23 permet d'introduire une référence à ajustement automatique, en l'occurrence la tension produite par le capteur 29, illustrée par la courbe 40 sur la figure 5.

Le diaphragme 27 a des dimensions et un positionnement tels qu'il laisse passer l'intégralité de la lumière du faisceau 5" lorsque la surface à repérer est située dans un intervalle I₁ (figure 5) : le signal alors émis correspond au plateau 41.

En dehors de cet intervalle I₁, une partie du flux lumineux est stoppée par le diaphragme 27.

Ainsi, en dehors du plateau 41, une partie du faisceau est interceptée par le diaphragme 27, le signal chute alors par rapport à la valeur du plateau 41 comme l'inverse du carré de la distance par rapport à la surface 2A (respectivement 2B).

Lorsque le signal de discrimination illustré par la courbe 40 atteint la valeur du plateau 41, et lorsque le signal de détection illustré par la courbe 30 dépasse le plateau 41 du signal de discrimination pour atteindre le sommet du pic 31, la distance entre le palpeur et la surface correspond à la distance cible (soit un écart avec le foyer F1 nul). A l'inverse, les pics secondaires, liés au phénomène de diffraction, sont inférieurs à la valeur du signal de tension du capteur de discrimination.

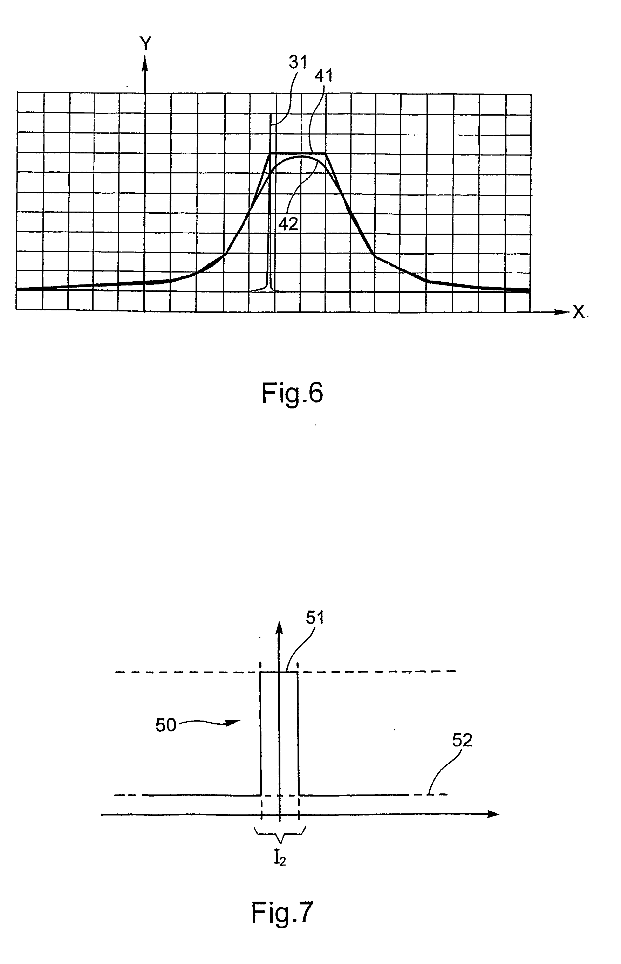

En pratique, la variation de la sensibilité du capteur 29 entre son centre et ses bords peut entraîner une modification de la forme en plateau 41 du signal de discrimination qui prendra alors une forme arrondie convexe 42 (figure 6).

L'intervalle dans lequel la valeur du signal de détection est supérieure à celle du signal de discrimination correspond à l'intervalle de détection I₂ dans lequel on considère que la surface est confondue avec le foyer F1 du palpeur. Ceci se traduit par un signal logique illustré par la courbe 50 représentée en figure 7, obtenu par comparaison à l'aide d'un comparateur 60 (figure 4) des valeurs de tension transmise par l'ensemble de détection 22 et l'ensemble de discrimination 23, prenant un premier état logique 51 lorsque la distance entre le foyer F1 et la surface est comprise dans l'intervalle I₂ et un second état logique 52 sinon.

Ainsi, la largeur spatiale, égale à I₂, dans lequel le signal logique prend l'état 51 correspond aux seuils de tolérance que l'on considère acceptables pour le repérage d'une surface : dans le cas de verres de lunettes, l'intervalle I₂ peut par exemple avoir une largeur de 10 micromètres, ce qui correspond à une valeur d'imprécision de mesure égale au maximum à plus ou moins 5 micromètres pour chaque surface à repérer.

On pourra par exemple utiliser une logique TTL pour la réalisation de ce signal.

Lorsque le palpeur rentre dans l'intervalle de détection I₂, l'unité centrale 8 commande l'arrêt du déplacement du palpeur, la position du palpeur est lue et transmise à l'unité électronique 7 par la tête de lecture 15. La distance séparant le palpeur de la face à repérer étant connue et égale à la distance cible, la position de la surface peut être déterminée.

Ce mode de détection peut être qualifié de différentiel car il est obtenu par comparaison des valeurs de deux signaux distincts obtenus par deux détecteurs distincts.

Un tel mode de détection est ainsi rendu indépendant de l'amplitude des signaux, des pics secondaires, de l'indice du verre ou encore de la nature des différentes couches le recouvrant à partir du moment où elles réfléchissent partiellement la lumière, à la longueur d'onde choisie, émise par le palpeur.

Un tel mode de détection permet également en choisissant un intervalle I₁ plus grand que l'intervalle I₂ de réaliser une détection « en avance » de l'intervalle I₂. Lorsque le signal de discrimination se rapproche du plateau 41, cela signifie que le palpeur se rapproche de l'intervalle I₂ et donc de la distance cible ce qui peut permettre par exemple de ralentir la course rapide du palpeur à l'approche de cette distance cible.

La valeur pratique de la distance cible est déduite par le calcul lors d'une phase préliminaire d'étalonnage dans laquelle le palpeur optique est placé à la distance cible par rapport à la surface d'un verre étalon dont l'épaisseur est connue : la distance séparant le palpeur de la surface du verre à repérer peut ensuite être obtenue par simple comparaison avec la distance de référence séparant le palpeur lorsqu'il est situé à la distance cible par rapport à la surface du verre étalon.

La même méthode de positionnement peut-être appliquée, simultanément ou non, pour la seconde face principale du verre grâce au second palpeur placé en regard de celle-ci et disposant de moyens de déplacement et de lecture de la position du palpeur identiques.

L'épaisseur du verre est déduite par l'unité centrale 8 par simple comparaison des positions des surfaces principales du verre dont on souhaite déterminer l'épaisseur.

En vue d'obtenir le palpeur optique le plus compact possible, les diaphragmes placés devant les capteurs sont réalisés en pratiquant un trou dans une feuille de matière noire. Chaque feuille est accolée à un bloc transparent à la lumière émise par la source lumineuse 20, lui-même accolé au capteur. Ces blocs transparents non représentés sur les figures ont pour but d'améliorer la rigidité du palpeur optique.

Lors de l'assemblage du palpeur, une fois l'ensemble des éléments du palpeur optique en position, ces éléments sont noyés dans une résine durcissante afin de figer définitivement les positions et les distances des différents éléments les uns par rapport aux autres de façon à ce que les qualités optiques du palpeur ne se dégradent pas au fil du temps par déplacement des éléments.

Dans une variante non illustrée, le bloc séparateur de détection et le bloc séparateur de discrimination ne sont pas accolés afin de décaler spatialement le plateau 41 du signal de discrimination par rapport au pic 31 du signal de détection pour par exemple augmenter l'avance de détection à l'approche de l'intervalle I₂.

Dans une autre variante de réalisation, le miroir 25" du bloc de discrimination 25 a un taux de réflexion/transmission 10/90 de façon à transmettre un maximum de flux lumineux pour le signal de détection, le diamètre important du trou du diaphragme 27 permettant d'obtenir un signal de discrimination à partir d'une faible quantité de lumière.

Dans une autre variante de réalisation, les blocs séparateurs sont remplacés par des miroirs séparateurs simples.

Dans une autre variante de réalisation, la tête de lecture optique 15 et la règle 16 sur laquelle la position est lue sont remplacées par un capteur de déplacement linéaire LVDT (Linear Variable Differential Transformer).

## Revendications

1. Palpeur optique comportant des moyens opto-électriques adaptés à prendre un état électrique prédéterminé si et seulement si ledit palpeur (3) est situé à une distance cible préfixée par rapport à une surface (2A, 2B) au moins partiellement réfléchissante, ledit palpeur comportant :
- une source lumineuse (20) ;
- des moyens de conformation (24, 25, 21) pour conformer le faisceau émis par ladite source lumineuse en un faisceau incident (5) convergeant vers un foyer (F1) situé à ladite distance cible et pour conformer le faisceau provenant de ladite surface par réflexion dudit faisceau incident (5) lorsque ladite surface est au voisinage de ladite distance cible en un faisceau à détecter (5') convergeant vers un foyer (F2), distinct de ladite source lumineuse, occupant un emplacement prédéterminé lorsque ladite surface est à ladite distance cible ; et
- un ensemble de détection optique (22) comportant un diaphragme (26) à trou d'épingle, disposé audit emplacement prédéterminé, et un capteur photoélectrique (28) produisant un pic de tension (31) lorsque ladite surface est à ladite distance cible ;
**caractérisé en ce que** :
- lesdits moyens de conformation (24, 25, 21) sont adaptés à conformer également ledit faisceau provenant de ladite surface en un faisceau de discrimination (5") convergeant vers un foyer distinct de ladite source lumineuse et dudit foyer du faisceau à détecter, occupant un autre emplacement prédéterminé lorsque ladite surface est à ladite distance cible ; et
- ledit palpeur comporte en outre un ensemble de discrimination optique (23) comportant un diaphragme (27) à trou plus grand que ledit trou d'épingle, disposé au moins à proximité dudit autre emplacement prédéterminé, et un capteur photoélectrique (29) produisant une tension supérieure à ladite tension produite par ledit capteur de détection (28) sauf lorsque ladite surface (2A, 2B) est à la distance cible, grâce à quoi ledit état électrique prédéterminé est celui où la tension produite par le capteur de détection (28) est supérieure à la tension produite par le capteur de discrimination (29).

2. Palpeur selon la revendication 1, **caractérisé en ce que** lesdits moyens de conformation comportent : un bloc séparateur semi-réfléchissant de détection (24) apte à orienter ledit faisceau à détecter (5') vers ledit ensemble de détection (22) ; un bloc séparateur semi-réfléchissant de discrimination (25) apte à orienter ledit faisceau de discrimination (5") vers ledit ensemble de discrimination (23) ; et un objectif (21).

3. Palpeur selon la revendication 2, **caractérisé en ce que** ledit bloc séparateur de détection (24) est disposé entre ladite source lumineuse (20) et ledit bloc séparateur de discrimination (25), tandis que ledit bloc séparateur de discrimination (25) est disposé entre ledit bloc séparateur de détection (24) et ledit objectif (21).

4. Palpeur selon la revendication 3, **caractérisé en ce que** ledit bloc séparateur de détection (24) et ledit bloc séparateur de discrimination (25) sont accolés l'un à l'autre.

5. Palpeur selon l'une quelconque des revendications 2 à 4, **caractérisé en ce que** ledit ensemble de détection (22) est disposé en regard dudit bloc séparateur de détection (24) transversalement à l'axe optique du palpeur et ledit ensemble de discrimination (23) est disposé en regard dudit bloc séparateur de discrimination (25) transversalement à l'axe optique du palpeur.

6. Palpeur selon l'une quelconque des revendications 2 à 5, **caractérisé en ce que** ledit bloc séparateur de détection (24) et ledit bloc séparateur de discrimination (25) comportent chacun un miroir semi-réfléchissant (24", 25") incliné à 45° par rapport à l'axe optique du palpeur.

7. Palpeur selon la revendication 6, **caractérisé en ce que** lesdits miroirs (24", 25") ont un taux de réflexion/transmission 50/50.

8. Palpeur selon la revendication 6, **caractérisé en ce que** ledit miroir (24") du bloc séparateur de détection a un taux de réflexion/transmission 50/50 et ledit miroir (25") du bloc séparateur de discrimination a un taux de réflexion/transmission 10/90.

9. Palpeur selon l'une quelconque des revendications 1 à 8, **caractérisé en ce que** ledit trou d'épingle a un diamètre compris entre 10 et 30 micromètres.

10. Palpeur selon l'une quelconque des revendications 2 à 9, **caractérisé en ce** ledit objectif (21) est formé par l'association d'une lentille plan-convexe (21') et d'une lentille asphérique (21 ").

11. Palpeur selon l'une quelconque des revendications 1 à 10, **caractérisé en ce que** ladite source lumineuse (20) est une diode laser à amplificateur intégré.

12. Palpeur selon la revendication 11, **caractérisé en ce que** la longueur d'onde d'émission de ladite diode laser est comprise entre 635 et 1600 nanomètres.

13. Palpeur selon l'une quelconque des revendications 11 ou 12, **caractérisé en ce que** la lumière est émise directement de ladite diode laser jusqu'au bloc séparateur de détection (24).

14. Palpeur selon l'une quelconque des revendications 1 à 13, **caractérisé en ce que** ladite source lumineuse (20), lesdits moyens de conformation (24, 25, 21), ledit ensemble de détection (22) et ledit ensemble de discrimination (23) sont noyés solidairement par coulage d'une résine qui les maintient en position les uns par rapport aux autres.

15. Dispositif de mesure d'épaisseur d'un objet (2) dont les surfaces (2A, 2B) entre lesquelles on souhaite mesurer l'épaisseur sont au moins partiellement réfléchissantes, **caractérisé en ce que** ledit dispositif comporte :
- deux bras de palpage de part et d'autre dudit objet (2) comportant chacun un palpeur (3) selon l'une quelconque des revendications 1 à 14 et des moyens de déplacement (10) desdits palpeurs ;
- pour chaque bras de palpage, une tête de lecture (15) pour repérer la position de ce bras sur une règle de repérage (16) ; et
- des unités électroniques (7, 8) pour commander lesdits moyens de déplacement (10), pour lire la position desdits palpeurs et pour calculer ladite épaisseur dudit objet lorsque lesdits palpeurs sont situés auxdites distances cibles préfixées.

16. Procédé de mesure de l'épaisseur d'une lentille optique **caractérisé en ce qu'**il comporte l'étape de positionner le palpeur de chaque bras de palpage du dispositif de mesure d'épaisseur selon la revendication 15 à ladite distance cible par rapport à ladite surface en regard de laquelle il est disposé et l'étape de déterminer ladite épaisseur par comparaison desdites positions desdits palpeurs.

## Claims

1. Optical probe including opto-electrical means adapted to assume a predetermined electrical state if and only if said probe (3) is situated at a preset target distance from a surface (2A, 2B) that is at least partially reflective, said probe including:
- a light source (20);
- shaping means (24, 25, 21) for shaping the beam emitted by said light source into an incident beam (5) converging toward a focus (F1) situated at said target distance and for shaping the beam coming from said surface by virtue of reflection of said incident beam (5) when said surface is in the vicinity of said target distance into a beam (5') to be detected converging toward a focus (F2), separate from said light source, occupying a predetermined location when said surface is at said target distance; and
- an optical detection system (22) including a diaphragm (26) including a pinhole, disposed at said predetermined location, and a photoelectric sensor (28) producing a voltage peak (31) when said surface is at said target distance;
**characterized in that**:
- said shaping means (24, 25, 21) are adapted also to shape said beam coming from said surface into a discrimination beam (5") converging toward a focus separate from said light source and from said focus of the beam to be detected, occupying another predetermined location when said surface is at said target distance; and
- said probe further includes an optical discrimination system (23) including a diaphragm (27) including a hole larger than said pinhole, disposed at least in the vicinity of said other predetermined location, and a photoelectric sensor (29) producing a voltage higher than said voltage produced by said detection sensor (28) except when said surface (2A, 2B) is at the target distance, whereby said predetermined electrical state is that in which the voltage produced by the detection sensor (28) is greater than the voltage produced by the discrimination sensor (29).

2. Probe according to claim 1, **characterized in that** said shaping means include: a detection semi-reflecting splitter block (24) adapted to orient said beam (5') to be detected toward said detection system (22), a discrimination semi-reflecting splitter block (25) adapted to orient said discrimination beam (5") toward said discrimination system (23), and a lens assembly (21).

3. Probe according to claim 2, **characterized in that** said detection splitter block (24) is disposed between said light source (20) and said discrimination splitter block (25) and said discrimination splitter block (25) is disposed between said detection splitter block (24) and said lens assembly (21).

4. Probe according to claim 3, **characterized in that** said detection splitter block (24) and said discrimination splitter block (25) are in contact with each other.

5. Probe according to any one of claims 2 to 4, **characterized in that** said detection system (22) is disposed facing said detection splitter block (24) transversely to the optical axis of the probe and said discrimination system (23) is disposed facing said discrimination splitter block (25) transversely to the optical axis of the probe.

6. Probe according to any one of claims 2 to 5, **characterized in that** said detection splitter block (24) and said discrimination splitter block (25) each include a semi-reflecting mirror (24", 25") inclined at 45° to the optical axis of the probe.

7. Probe according to claim 6, **characterized in that** said mirrors (24", 25") have a reflection/transmission ratio of 50/50.

8. Probe according to claim 6, **characterized in that** said mirror (24") of the detection splitter block has a reflection/transmission ratio of 50/50 and said mirror (25") of the discrimination splitter block has a reflection/transmission ratio of 10/90.

9. Probe according to any one of claims 1 to 8, **characterized in that** said pinhole has a diameter from 10 to 30 micrometers.

10. Probe according to any one of claims 2 to 9, **characterized in that** said lens assembly (21) is formed by the association of a plano-convex lens (21') and an aspherical lens (21").

11. Probe according to any one of claims 1 to 10, **characterized in that** said light source (20) is a laser diode with integrated amplifier.

12. Probe according to claim 11, **characterized in that** the emission wavelength of said laser diode is from 635 to 1600 nanometers.

13. Probe according to either of claims 11 or 12, **characterized in that** light is emitted directly from said laser diode as far as the detection splitter block (24).

14. Probe according to any one of claims 1 to 13, **characterized in that** said light source (20), said shaping means (24, 25, 21), said detection system (22) and said discrimination system (23) are fastened together by encapsulating them by casting a resin that holds them in position relative to each other.

15. Device for measuring the thickness of an object (2) the surfaces (2A, 2B) whereof between which the thickness is to be measured are at least partly reflective, **characterized in that** said device includes:
- two probe arms on respective opposite sides of said object (2) each including a probe (3) according to any one of claims 1 to 14 and displacement means (10) for said probes;
- for each probe arm, a reading head (15) for determining the position of that arm on a scale (16); and
- electronic units (7, 8) for controlling said displacement means (10), for reading the position of said probes and for calculating said thickness of said object when said probes are situated at said preset target distances.

16. Method for measuring the thickness of an optical lens **characterized in that** it includes the step of positioning the probe of each probe arm of the thickness measuring device according to claim 15 at said target distance relative to said surface facing which it is disposed and the step of determining said thickness by comparison of said positions of said probes.

## Patentansprüche

1. Optische Sonde umfassend optoelektrische Mittel, die geeignet sind, einen vorbestimmten elektrischen Zustand anzunehmen, wenn und nur wenn die Sonde (3) sich in einer vorher festgelegten Zieldistanz bezüglich einer zumindest teilweise reflektierenden Oberfläche (2A, 2B) befindet, wobei die Sonde umfasst:
- eine Lichtquelle (20);
- Anpassungsmittel (24, 25, 21), um den von der Lichtquelle ausgesendeten Strahl zu einem Einfallsstrahl (5) anzupassen, der zu einem bei der Zieldistanz befindlichen Brennpunkt (F1) konvergiert, und um den Strahl, der von der Oberfläche durch Reflektion des Einfallsstrahl (5) hervorgeht, wenn die Fläche in der Nachbarschaft der Zieldistanz ist, zu einem zu detektierenden Strahl (5') anzupassen, der zu einem Brennpunkt (F2) hin konvergiert, der unterschiedlich von der Lichtquelle ist, eine vorbestimmte Stelle einnehmend, wenn die Fläche bei der Zieldistanz ist; und
eine optische Detektionsanordnung (22), umfassend eine Blende (26) mit Nadelloch, angeordnet bei der vorbestimmten Stelle, und einen fotoelektrischen Sensor (28), der einen Spannungsausschlag (31) produziert, wenn die Oberfläche bei der Zieldistanz ist;
**dadurch gekennzeichnet, dass**:
- die Anpassungsmittel (24, 25, 21) ausgelegt sind, auch den von der Oberfläche stammenden Strahl zu einem Diskriminierungsstrahl (5") anzupassen, der zu einem von der Lichtquelle und dem Brennpunkt des zu detektierenden Strahls unterschiedlichen Brennpunkt hin konvergiert, eine andere vorbestimmte Stelle einnehmen, wenn die Oberfläche bei der Zieldistanz ist; und
- die Sonde des weiteren eine optische Diskriminierungsanordnung (23) umfasst, die eine Blende (27) mit einem Loch umfasst, das größer ist als das Nadelloch, angeordnet zumindest in der Nähe der anderen vorbestimmten Stelle, sowie einen fotoelektrischen Sensor (29), der eine höhere Spannung produziert als die von dem Detektionssensor (28) produzierte Spannung außer wenn die Oberfläche (2A, 2B) bei der Zieldistanz ist, wodurch der vorbestimmte elektrische Zustand derjenige ist, bei dem die von dem Detektionssensor (28) produzierte Spannung höher ist als die von dem Diskriminierungssensor (29) produzierte Spannung.

2. Sonde gemäß Anspruch 1, **dadurch gekennzeichnet, dass** die Anpassungsmittel umfassen:
einen halbreflektierenden Detektionsseparatorblock (24), geeignet den zu detektierenden Strahl (5') zur Detektionsanordnung (22) hin zu orientieren; einen halbreflektierender Diskriminierungsseparatorblock (25), der geeignet ist, den Diskriminierungsstrahl (5") zur Diskriminierungsanordnung (23) hin zu orientieren; und ein Objektiv (21).

3. Sonde gemäß Anspruch 2, **dadurch gekennzeichnet, dass** der Detektionsseparatorblock (24) zwischen der Lichtquelle (20) und dem Diskriminierungsseparatorblock (25) angeordnet ist, wohingegen der Diskriminierungsseparatorblock (25) zwischen dem Detektionsseparatorblock (24) und dem Objektiv (21) angeordnet ist.

4. Sonde gemäß Anspruch 3, **dadurch gekennzeichnet, dass** der Detektionsseparatorblock (24) und der Diskriminierungsseparatorblock (25) aneinander gefügt sind.

5. Sonde gemäß einem der Ansprüche 2 bis 4, **dadurch gekennzeichnet, dass** die Detektierungsanordnung (22) gegenüber dem Detektionsseparatorblock (24) transversal zur optischen Achse der Sonde angeordnet ist, und die Diskriminierungsanordnung (23) gegenüber dem Diskriminierungsseparatorblock (25) transversal zur optischen Achse der Sonde angeordnet ist.

6. Sonde nach einem der Ansprüche 2 bis 5, **dadurch gekennzeichnet, dass** der Detektionsseparatorblock (24) und der Diskriminierungsseparatorblock (25) jeder einen halbreflektierenden Spiegel (24", 25") umfassen, der um 45° bezüglich der optischen Achse der Sonde geneigt ist.

7. Sonde gemäß Anspruch 6, **dadurch gekennzeichnet, dass** die Spiegel (24", 25") ein Reflektions-/Transmissionsverhältnis von 50/50 haben.

8. Sonde gemäß Anspruch 6, **dadurch gekennzeichnet, dass** der Spiegel (24") des Detektionsseparatorblocks ein Reflektions-/Transmissionsverhältnis von 50/50 hat und der Spiegel (25") des Diskriminierungsseparatorblocks ein Reflektions-/Transmissionsverhältnis von 10/90 hat.

9. Sonde gemäß einem der Ansprüche 1 bis 8, **dadurch gekennzeichnet, dass** das Nadelloch einen Durchmesser hat, der enthalten ist zwischen 10 und 30 Mikrometern.

10. Sonde gemäß einem der Ansprüche 2 bis 9, **dadurch gekennzeichnet, dass** das Objektiv (12) gebildet ist durch die Vereinigung einer plankonvexen Linse (21') und einer asphärischen Linse (21").

11. Sonde gemäß einem der Ansprüche 1 bis 10, **dadurch gekennzeichnet, dass** die Lichtquel - le (20) eine Laserdiode mit integriertem Verstärker ist.

12. Sonde gemäß Anspruch 11, **dadurch gekennzeichnet, dass** die Emissionswellenlänge der Laserdiode enthalten ist zwischen 635 und 1600 Nanometern.

13. Sonde gemäß einem der Ansprüche 11 oder 12, **dadurch gekennzeichnet, dass** das Licht direkt von der Laserdiode zum Detektionsseparatorblock (24) emitiert wird.

14. Sonde gemäß einem der Ansprüche 1 bis 13, **dadurch gekennzeichnet, dass** die Lichtquelle (20), die Anpassungsmittel (24, 25, 21), die Detektionsanordnung (22) und die Diskriminierungsanordnung (23) gemeinsam durch Gießen eines Harzes versenkt werden, welche sie in einer Position mit Bezug zueinander hält.

15. Vorrichtung zum Messen der Dicke eines Gegenstands (2), dessen Oberflächen (2A, 2B), zwischen denen man die Dicke zu messen wünscht, zumindest teilweise reflektierend sind, **dadurch gekennzeichnet, dass** die Vorrichtung umfasst:
- zwei Sondenarme auf beiden Seiten des Gegenstands (2), umfassend jeweils eine Sonde (3) gemäß einem der Ansprüche 1 bis 14 und Versetzungsmittel (10) der Sonde;
- für jeden der Sondenarme einen Lesekopf (15) um die Position dieses Arms an einem Bezugsmaßstab (16) abzulesen; und
- elektronische Einheiten (7, 8), um die Versetzungsmittel (10) anzusteuern, um die Position der Sonden zu lesen und um die Dicke des Gegenstands zu berechnen, wenn die Sonden sich bei den vorher festgelegten Zieldistanzen befinden.

16. Verfahren zum Messen der Dicke einer optischen Linse, **dadurch gekennzeichnet, dass** es den Schritt des Positionierens der Sonde von jedem Sondenarm der Vorrichtung zur Dikkenmessung gemäß Anspruch 15 bei der Zieldistanz bezüglich der Oberfläche, gegenüber welcher er angeordnet ist, umfasst, sowie den Schritt des Bestimmens der Dicke durch Vergleich der Positionen der Sonden.
